(19) Europäisches Patentamt
European Patent Office
Office européen des brevets

(11) **EP 1 986 252 A2**

(12) **EUROPEAN PATENT APPLICATION**

(43) Date of publication:
**29.10.2008 Bulletin 2008/44**

(51) Int Cl.:
***H01M 2/10*** *(2006.01)*   ***H01M 10/42*** *(2006.01)*
***H01M 10/50*** *(2006.01)*

(21) Application number: **08102872.2**

(22) Date of filing: **25.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.04.2007   KR 20070041371**

(71) Applicant: **Samsung SDI Co., Ltd.**
**Suwon-si, Gyeonggi-do (KR)**

(72) Inventors:
• **Lee, Gun-Goo**
**c/o Legal&IP Team Samsung SDI Co Ltd**
**Kyunggi-do (KR)**

• **Yoon, Ji-Hyoung**
**c/o Legal&IP Team Samsung SDI Co Ltd**
**Kyunggi-do (KR)**
• **Park, Jun-Pyo**
**c/o Legal&IP Team Samsung SDI Co Ltd**
**Kyunggi-do (KR)**
• **Kim, Ki-Woon**
**c/o Legal&IP Team Samsung SDI Co Ltd**
**Kyunggi-do (KR)**

(74) Representative: **Grey, Ian Michael et al**
**Venner Shipley LLP**
**20 Little Britain**
**London EC1A 7DH (GB)**

(54)   **A frame to support a plurality of unit batteries to form a battery module**

(57)   A battery module that includes a plurality of unit batteries, a frame, and supporters. The frame includes holes for receiving and supporting the unit batteries. Each of the supporters is formed in a form of a protrusion and is disposed between the holes and the unit batteries for supporting the unit batteries.

FIG. 1

EP 1 986 252 A2

## Description

The present invention relates to a frame to support a plurality of unit batteries and to a battery module composed of a plurality of connected unit batteries. More particularly, the present invention relates to a battery module having an improved structure for cooling the unit batteries.

Rechargeable batteries can be repeatedly charged and discharged, unlike a primary battery that is incapable of being recharged. A low capacity rechargeable battery composed of a single cell is generally used for a portable small electronic device, such as a mobile phone, a laptop computer, and a camcorder. A large capacity rechargeable battery composed of a plurality of cells connected in a form of a pack is widely used to drive a motor for a hybrid electric vehicle.

Such a rechargeable battery is manufactured in various forms. The representative form of a rechargeable battery is a cylindrical form or a quadrilateral form.

A large capacity battery module is composed of a plurality of serially connected rechargeable batteries to drive a motor for a hybrid electric vehicle, which needs a large amount of electric power. In general, a battery module is composed of a plurality of serially connected rechargeable batteries. Hereinafter, a rechargeable battery refers to a unit battery throughout the specification for better understanding and ease of description.

Each unit battery includes an electrode assembly having an anode and a cathode with a separator interposed therebetween, a case having a space for housing the electrode assembly, and a cap assembly coupled to the case for closing and sealing the case and having an electrode terminal electrically connected to the electrode assembly.

In general, the unit batteries are arranged at a regular distance in a housing, and the terminals of the unit batteries are connected with each other, thereby forming a battery module.

For stability, the battery module has a structure of connecting a plurality of unit batteries to form one module.

Since several tens of unit batteries are connected to form one battery module, the battery module must effectively dissipate heat generated from each unit battery.

The heat dissipation characteristic of the battery module is very important because the performance of not only the unit batteries but also an electronic device employing the battery module is significantly influenced by the heat dissipation characteristic.

If the heat is not properly dissipated, a large temperature deviation is generated among the unit batteries so that the battery module cannot output sufficient power to drive the motor. If the inside temperature increases by the heat generated from the unit batteries, an abnormal reaction occurs internally. As a result, the charging and discharging performance of the unit batteries is deteriorated.

Particularly, when the battery module is used as a large capacity rechargeable battery for driving a motor for an electric cleaner, an electric scooter, an electric vehicle, or a hybrid electric vehicle, the unit batteries are charged or discharged with a high current. Accordingly, the inside temperature of the unit batteries increases to a high temperature according to a use state. Therefore, the battery module needs to smoothly dissipate the heat generated from the unit batteries.

The above information disclosed in this Background section is only for enhancement of understanding of the background of the invention and therefore it may contain information that does not form the prior art that is already known in this country to a person of ordinary skill in the art.

The present invention has been made in an effort to provide a battery module having the advantage of efficiently cooling unit batteries by improving the structure of a frame for supporting the unit batteries.

The technical subject of the present invention is to provide a battery module for efficiently cooling the unit batteries by improving the structure of a frame for supporting the unit batteries.

Another technical subject of the present invention is to provide a battery module for uniformly cooling the unit batteries.

An exemplary embodiment of the present invention provides a battery module including a plurality of unit batteries, a frame, and supporters. The frame includes holes for receiving and supporting the unit batteries. Each of the supporters is formed in a form of a protrusion and is disposed between the holes and the unit batteries for supporting the unit batteries.

Each of the supporters may be continuously formed from one end of the hole to the other end of the hole.

In the frame, spaces among the holes may be blocked.

Each of the holes may be formed to have the same length as the unit batteries, in which $0.03 \leq (R2-R1)/R1 \leq 0.18$ where R2 denotes a radius of the hole and R1 denotes a width direction radius of the unit batteries and $0.001 \leq (R2-R1)/L1 \leq 0.025$ where R2 denotes a radius of the hole, R1 denotes a width direction radius of the unit batteries, and L1 denotes a length of the unit batteries.

The unit batteries may have a cylindrical form, in which a length direction of the unit batteries may be disposed in parallel with the direction of a flowing coolant contacting with the unit batteries.

The battery module may further include a housing having an inlet for receiving the coolant and an outlet for discharging the coolant, wherein a frame is disposed inside the housing.

The outlet may be formed at a side facing a side having the inlet. Inclines may be formed at corners where a side having the inlet meets the sides.

A distance between the inside surfaces of the holes and the unit batteries adjacent to the inlet may be longer than a distance between the inside surfaces of the holes and the unit batteries adjacent to the outlet.

The distance between the unit batteries and the inside surfaces of the holes may gradually decrease from the inlet to the outlet.

The inlet and the outlet may be formed at the same side.

A distance between the inside surfaces of the holes and the unit batteries adjacent to the outlet may be shorter than a distance between the inside surfaces of the holes and the unit batteries far from the outlet.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a perspective view of a battery module according to a first exemplary embodiment of the present invention.

FIG. 2 is a partial perspective view of a battery module according to the first exemplary embodiment of the present invention.

FIG. 3 is a perspective view of a battery module according to a second exemplary embodiment of the present invention.

FIG. 4 is a front view of a frame and unit batteries according to the second exemplary embodiment of the present invention.

FIG. 5 is a perspective view of a battery module according to a third exemplary embodiment of the present invention.

FIG. 6 is a front view of a frame and unit batteries according to the third exemplary embodiment of the present invention.

FIG. 7 is a partial cross-sectional perspective view of a battery module according to the fourth exemplary embodiment of the present invention.

Hereinafter, the present invention will be described more fully with reference to the accompanying drawings, in which exemplary embodiments of the present invention are shown.

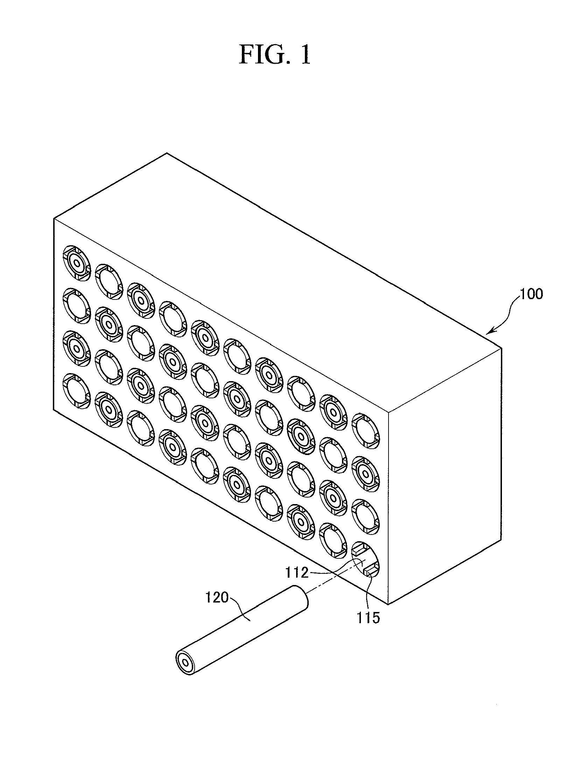

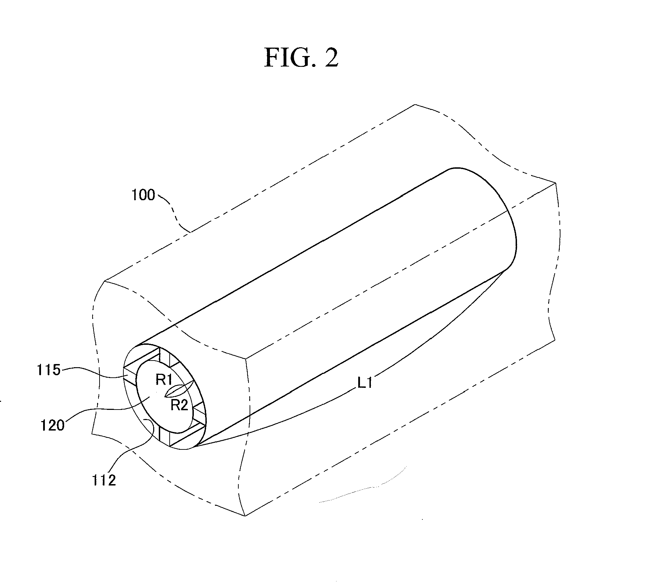

FIG. 1 is a perspective view of a battery module according to a first exemplary embodiment of the present invention, and FIG. 2 is a partial perspective view of a battery module according to the first exemplary embodiment of the present invention.

Referring to the drawing, the battery module according to the present exemplary embodiment includes a frame 100 having holes 112 to receive unit batteries 120, unit batteries 120 inserted into the frame 100, and support elements 115 are formed in the holes 112 for supporting the unit batteries 120.

The unit batteries 120 according to the present exemplary embodiment are formed in a cylindrical shape. However, the present invention is not limited thereto, and therefore the unit batteries 120 may be formed in various shapes other than a cylindrical shape.

Since the holes 112 are formed in the frame 100 where the unit batteries 120 are inserted, the holes 112 are arranged to form a plurality of rows and columns in parallel with the frame 100.

As shown in FIG. 2, each of the holes 112 has both ends open. Four support elements 115 are disposed in each of the holes 112 to support the unit batteries 120. Each of the support elements 115 is a radially inwardly extending protrusion formed in a rectangular rod shape. The supporters 115 separate or space the unit batteries 120 from the inside surfaces of the holes 112.

In the present exemplary embodiment, four supporters 115 are disposed in each of the holes 112. However, the present invention is not limited thereto. Therefore, various numbers of supporters 115 may be disposed according to the size and shape of the unit batteries 120.

Coolant flows between the unit batteries 120 and the inside surfaces of the holes 112. The amount of coolant is determined by the distance between the unit batteries 120 and the inside surfaces of the holes 112.

It is preferable that $(R2-R1)/R1$ is equal or larger than 0.03 and that $(R2-R1)/R1$ is equal or smaller than 0.18, where R1 denotes a radius of the unit batteries 120 and R2 denotes the internal diameter of the holes 112.

That is, when $(R2-R1)/R1$ is larger than 0.18, the cooling efficiency is deteriorated because a flow speed of the coolant is too slow, while when $(R2-R1)/R1$ is smaller than 0.03, the cooling efficiency is also deteriorated because the amount of coolant flowing to the holes is too small.

Since the unit batteries and the holes are formed at the same length in the present exemplary embodiment, it is preferable that $(R2-R1)/L1$ is equal or larger than 0.001 and that $(R2-R1)/L1$ is equal or smaller than 0.025, where L1 denotes the length of the unit batteries.

When $(R2-R1)/L1$ is smaller than 0.001, the cooling efficiency is deteriorated because the inflow amount of coolant is too small compared to the length, while when $(R2-R1)/L1$ is smaller than 0.025, the cooling efficiency is deteriorated because the flowing speed of the coolant is too slow compared to the length.

Each hole 112 is discrete and separate to each other hole 112. Accordingly, the coolant flows only through the holes 112, and the entire amount of coolant flowed into the front of the frame 100 flows into the holes 112. Therefore, the cooling efficiency can be maximized by increasing the amount of coolant flowed into the holes 112.

Meanwhile, each of the support elements 115 is formed in a rectangular rod shape and the support elements 115 are disposed to uniformly divide the insides of the holes 112. Since the support elements 115 are disposed between the entrance and the exit of the holes 112, the inside spaces between the holes 112 and the unit batteries 120 are divided by the support elements 115. If the inside spaces between the holes 112 and the unit batteries 120 are divided by the support elements 115, the coolant flows along each of the divided spaces without being mixed together. Therefore, the inflow speed increases and the unit batteries 120 are efficiently cooled down.

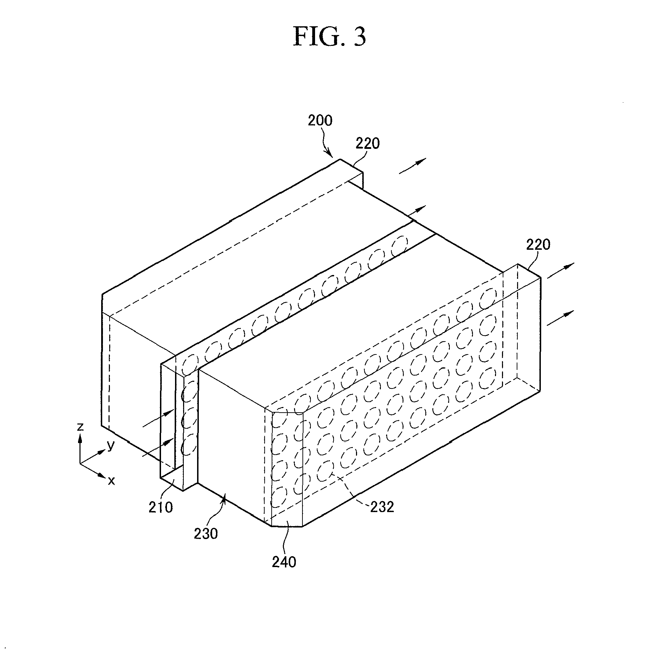

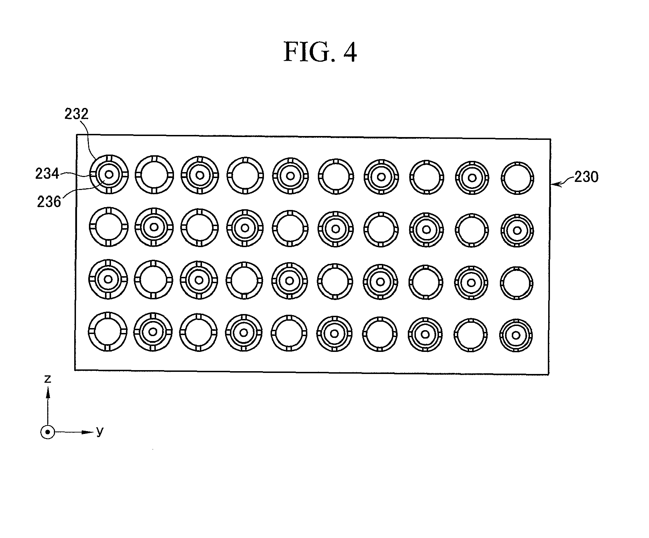

FIG. 3 is a perspective view of a battery module according to a second exemplary embodiment of the present invention, and FIG. 4 is a front view of a frame and unit batteries according to the second exemplary embodiment of the present invention.

Referring to FIG. 3, a battery module according to the present exemplary embodiment includes a housing 200 forming an external form, a frame 230 having holes 232, and unit batteries 236 inserted into the holes 232.

The housing 200 according to the present exemplary embodiment includes an inlet 210 formed at the center for flowing the coolant into the housing 200 and two outlets 220 formed at both edges for discharging the coolant. A passage is formed at the center of the housing 200 to flow the coolant from the inlet 210, and passages are formed at the both edges of the housing 200 to discharge the coolant passing through the holes 232. Accordingly, the coolant from the inlet 210 travels along the center passage, passes between the unit batteries 236, and discharges through the passages formed at both edges.

The housing 200 according to the present exemplary embodiment includes inclines 240 for connecting the front and the sides, which are formed at the corners where the front having the inlet 210 meets the sides. In FIG. 3, the incline 240 is a side vertical to an x-axis. When the coolant flows into the outside passage after the coolant cools the unit batteries 236 located at the front, the inclines 240 make the coolant flow quickly to the outlets 220.

Conventionally, when the inlet 210 and the outlets 220 are formed at opposite sides, a larger amount of coolant flows toward the outlets 220 than to the inlet 210. Accordingly, the unit batteries 236 near to the inlet 210 are not properly cooled, comparatively. However, when the inclines 240 are formed at corner adjacent to the inlet 210, as in the present exemplary embodiment, the coolant flows quickly along the inclines 240 to the outlets 220 after passing between the unit batteries 236 adjacent to the inlet 210. Therefore, the temperature deviation of the unit batteries 236 can be minimized.

In the present exemplary embodiment, the unit batteries 236 are arranged in parallel with the flow direction of the coolant passing through the unit batteries 236. That is, the coolant flows into the housing 200 through the inlet 210 formed at the center of the housing 200 and flows in a side direction, an x-axis direction of FIG. 3, along the holes 232 formed in the frame 230. The length direction of the unit batteries 236 is disposed in parallel with the x-axis direction.

Accordingly, the time that the coolant contacts the unit batteries 236 increases, and therefore, the unit batteries 236 are efficiently cooled.

As shown in FIG. 4, the frame 230 according to the present exemplary embodiment includes a plurality of holes 232. Support elements 234 are formed in the holes 232 to support the unit batteries 236. A distance between the unit batteries 236 and the inside surfaces of the holes 232 is decided by the internal diameter of the holes 232 and the heights of the support elements 234. The heights of the support elements 234 according to the present exemplary embodiment become gradually shorter from the inlet 210 to the outlets 220.

Accordingly, since a large amount of air inflows into the unit batteries 236 arranged near the inlet 210, the temperature deviation between the unit batteries 236 disposed near the inlet 210 and the unit batteries 236 disposed near the outlets 220 may be minimized.

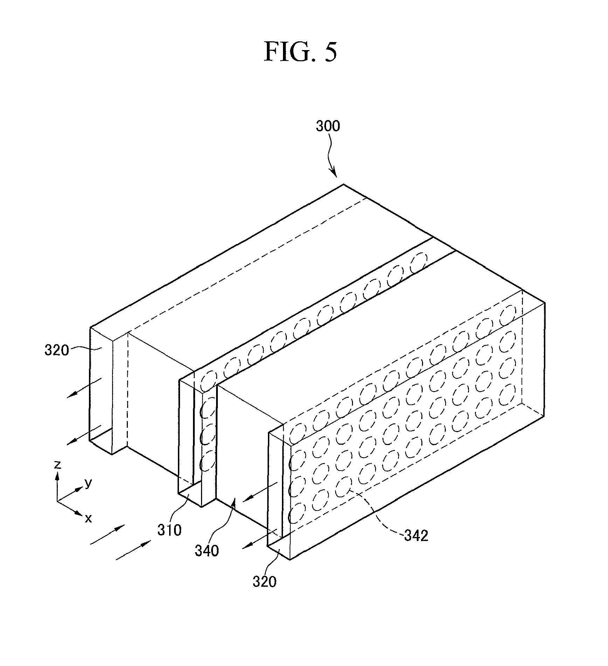

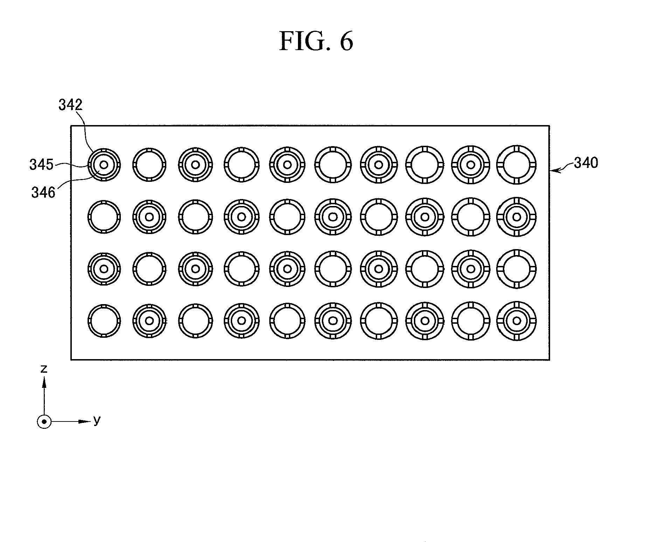

FIG. 5 is a perspective view of a battery module according to a third exemplary embodiment of the present invention, and FIG. 6 is a front view of a frame and unit batteries according to the third exemplary embodiment of the present invention. Referring to FIG. 5, a battery module according to the present exemplary embodiment includes a housing 300 for forming an external form, a frame 340 disposed in the housing 300 and having holes 342 for receiving unit batteries 346, and unit batteries 346.

The housing 300 according to the third exemplary embodiment has an inlet 310 formed at the center thereof for flowing coolant into the housing 300 and two outlets 320 formed at both edges for discharging the coolant. A passage is formed at the center of the housing 300 to flow air from the inlet 310 between the unit batteries 346. Also, passages are formed at both edges of the housing 300 to discharge coolant to the outlets 320 after passing through the unit batteries 346 located at the edge of the housing 300.

In the present exemplary embodiment, the inlet 310 and the outlets 320 are formed at the same side. Accordingly, the coolant from the inlet 310 discharges to the outlets 320 through the passages formed at the edges after cooling the unit batteries 346.

As shown in FIG. 6, the frame 340 according to the present exemplary embodiment includes support elements 345 in the holes 342 for supporting the unit batteries 346. The support elements 345 separate the unit batteries 346 from the inside surfaces of the holes 342, and the coolant flows through the spaces formed between the unit batteries 346 and the inside surfaces of the holes 342 to cool the unit batteries 346.

In the present exemplary embodiment, a distance between the inside surface of the holes 342 and the unit batteries 346 disposed near the inlet 310 is formed to be shorter than a distance between the inside surface of the holes 342 and the unit batteries 346 disposed at the opposite side from the side having the inlet 310. That is, the internal diameter of the holes 342 gradually increases from the inlet 310 to the side opposite thereto.

Conventionally, when the inlet 310 and the outlets 320 are formed at the same side, a larger amount of coolant flows to the unit batteries 346 near the inlet 310 than to the unit batteries 346 formed at the opposite side thereto, after the coolant flows into the housing through the inlet 310. This is because the pressure formed at the side having the inlet 310 is comparatively lower than that formed at the opposite side.

When a large amount of coolant flows to the unit batteries 346 near to the inlet 310, a large temperature deviation is induced among the unit batteries 346. However, if the distance between the inside surfaces of the holes 342 and the unit batteries 346 near to the inlet 310 is formed to be shorter than the distance between the inside surfaces of the holes 342 and the unit batteries 346 disposed at the opposite side, as in the present exemplary embodiment, a larger amount of air circulates at the opposite side to the inlet 310, compared to when the distance is uniformly formed. Therefore, the temperature deviation can be reduced.

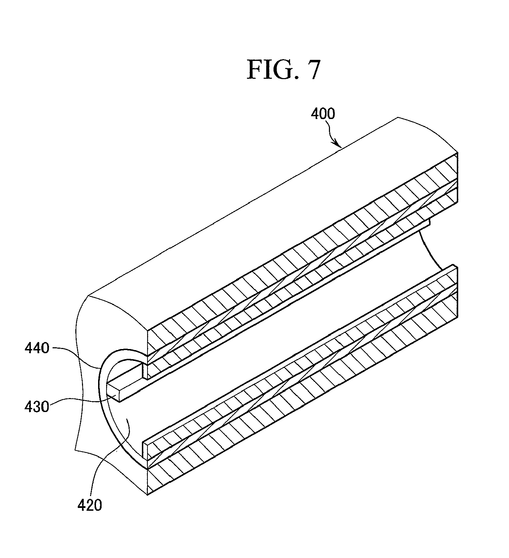

FIG. 7 is a partial cross-sectional perspective view of a battery module according to a fourth exemplary embodiment of the present invention. Referring to the drawing, a battery module according to the present exemplary embodiment includes a frame 400 having a hole 440, a guide pipe 420 inserted into the hole 440, a unit battery (not shown), and support elements 430 disposed between the guide pipe 420 and the unit battery for supporting the unit battery.

The battery module according to the fourth exemplary embodiment has the same structure of that according to the first exemplary embodiment except for the guide pipes 420. Therefore, the description of the same structure is omitted.

The guide pipe 420 according to the present exemplary embodiment is formed to have both ends open and has the same length as the unit battery.

Since the support elements 430 are formed in a rectangular rod shape, the support elements 430 are formed to have the same length as the guide pipe 420. If a unit battery is inserted into the guide pipe 420, the support elements 430 separate the unit battery from the guide pipe 420 to form spaces between the unit battery and the guide pipe 420.

The guide pipe 420 and the support elements 430 according to the present exemplary embodiment are formed of a thermally conductive material. Accordingly, the heat generated from the unit battery is transferred to the guide pipe 420 through the support elements 430, and the guide pipe 420 and the support elements 430 are cooled by the coolant. Such a structure not only directly cools the unit battery by the coolant, but also indirectly cools the unit battery through the support elements 430 and the guide pipe 420, thereby further improving the cooling efficiency.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

According to the embodiments of the present invention, the cooling efficiency of the unit batteries can be improved by stably supplying the coolant between the unit batteries and the holes. The temperature deviation among the unit batteries can be minimized by controlling the distances between the unit batteries and the coolant according to the structure of the inlet and the outlet of the coolant.

**Claims**

1. A frame to support a plurality of unit batteries to form a battery module, the frame comprising:

    a plurality of sockets, each socket being configured to receive and support a unit battery; and
    a support element associated with each socket to support a unit battery received in a socket and space a battery received in said socket away from a surface thereof to allow coolant to flow around said battery.

2. The frame of claim 1, wherein the support element comprises a plurality of spaced support portions that extend inward from said surface of the socket.

3. The frame of claim 1 or claim 2, wherein each support element extends the length of the socket.

4. The frame of any preceding claim, wherein each socket is isolated from every other socket.

5. The frame of any preceding claim, further comprising a housing having an inlet for receiving a coolant and an outlet for discharging the coolant.

6. The frame of claim 5, wherein the outlet is formed at an end of the frame opposite the end of the frame where the inlet is formed, the inlet and outlet extending at right-angles to the direction in which said sockets extend through the frame.

7. The frame according to claim 6, wherein each socket is cylindrical and the diameter of the sockets gradually changes from one end of the frame adjacent to the inlet to the other end of the frame adjacent to the outlet.

8. The frame of claim 7, wherein the sockets have a larger diameter closer to the inlet.

**9.** The frame of any of claims 6 to 8, wherein the housing defines a first duct having the inlet and extending across one side of the frame over said sockets and a second duct having the outlet and extending across the other side of the frame over said sockets.

**10.** The frame according to claim 9, wherein the cross-sectional area of one or both ducts gradually reduces in size towards their ends where they meet the frame and opposite to said inlet or outlet.

**11.** The frame according to claim 10, wherein each duct has a main wall extending parallel to the side of the frame and a side wall extending from the main wall towards the frame, wherein said side wall extends at an angle of less than 90 degrees towards the side of the frame.

**12.** The frame of claim 5, wherein the inlet and the outlet are formed at the same end on opposite sides of the frame.

**13.** The frame of claim 12, wherein the sockets close to the inlet and outlet are smaller than the sockets spaced from the inlet and outlet.

**14.** The frame of any preceding claim, wherein a guide pipe made of a thermally conductive material is disposed within the sockets and the support elements extend from said guide pipe.

**15.** A battery module comprising the frame of any preceding claim and, a battery unit received within each socket.

**16.** The battery module according to claim 15, wherein each socket has the same length as a unit battery.

**17.** The battery module of claim 16, wherein (R2-R1)/R1 satisfies the following condition:

$$0.03 \leq (R2\text{-}R1)/R1 \leq 0.18,$$

where R2 denotes a radius of the hole and R1 denotes a width direction radius of the unit batteries.

**18.** The battery module of claim 16, wherein (R2-R1)/L1 satisfies the following condition:

$$0.001 \leq (R2\text{-}R1)/L1 \leq 0.025,$$

where R2 denotes a radius of the hole, R1 denotes a width direction radius of the unit batteries, and L1 denotes a length of the unit batteries.

**19.** The battery module of any of claims 15 to 18, wherein the unit batteries have a cylindrical form.

**20.** The battery module of any of claims 15 to 19, wherein a length direction of the unit batteries is disposed in parallel with the direction of a flowing coolant contacting with the unit batteries.

# FIG. 1

# FIG. 2

# FIG. 3

# FIG. 4

FIG. 5

# FIG. 6

FIG. 7